# NEUE EUROPÄISCHE PATENTSCHRIFT

(11) **EP 0 939 476 B2**
(45) Veröffentlichungstag und Bekanntmachung des Hinweises auf die Entscheidung über den Einspruch: **20.06.2007**
(45) Hinweis auf die Patenterteilung: 04.10.2001
(21) Anmeldenummer: 99103538.7
(22) Anmeldetag: 24.02.1999
(51) Int. Cl.: H02J 9/06, H02J 9/02

(54) **Einrichtung zur zentralen Notlichtversorgung**
Device for central emergency lighting supply
Dispositif pour l'alimentation centrale d'un éclairage de sécurité

(30) Priorität: 25.02.1998 DE 19807844
(43) Veröffentlichungstag der Anmeldung: 01.09.1999
(73) Patentinhaber: INOTEC Sicherheitstechnik GmbH, 59469 Ense (DE)
(72) Erfinder: Klaas, Wilfried, 59519 Möhnesee (DE)
(74) Vertreter: Basfeld, Rainer

(56) Entgegenhaltungen:
- EP-A- 0 786 850
- DE-A- 2 835 549
- DE-A- 3 030 411
- DE-A- 3 112 314
- DE-A- 3 424 991
- DE-A- 3 618 790
- DE-A- 4 136 673
- DE-A- 19 611 161
- US-A- 3 809 917
- MLAR Fassung 1989, Seiten 4 bis 6
- MLAR Fassung 1993, Seiten 94 bis 97

## Beschreibung

Die vorliegende Erfindung betrifft eine Einrichtung zur zentralen Notlichtversorgung, insbesondere in einem Gebäude oder dergleichen, das neben der Notlichtversorgung auch eine Allgemeinbeleuchtung aufweist, umfassend mindestens zwei Endstromkreise einer Notbeleuchtung mit zwei Gruppen daran angeschlossener Leuchten, wobei die Leuchten der ersten Gruppe als Dauerlichtleuchten und die Leuchten der zweiten Gruppe als Bereitschaftslichtleuchten ausgeführt sind; eine zentrale Stromversorgungseinrichtung für die Notlichtversorgung; eine Zentralbatterie für die Notlichtversorgung; Spannungswächtereinheiten zur Registrierung eines Spannungsabfalls in einzelnen Abschnitten der Allgemeinbeleuchtung und/oder im Bereich der zentralen Stromversorgungseinrichtung für die Notlichtversorgung; sowie mit den Endstromkreisen verbundene Stromkreisumschalteinrichtungen, die bei Registrierung eines Spannungsabfalls in einem oder mehreren Abschnitten der Allgemeinbeleuchtung eine Versorgung der Bereitschaftslichtleuchten mit Strom aus der zentralen Stromversorgungseinrichtung für die Notlichtversorgung gewährleisten und bei Registrierung eines Spannungsabfalls im Bereich der zentralen Stromversorgungseinrichtung für die Notlichtversorgung eine Versorgung der Bereitschaftslichtleuchten und der Dauerlichtleuchten mit Strom aus der Zentralbatterie gewährleisten.

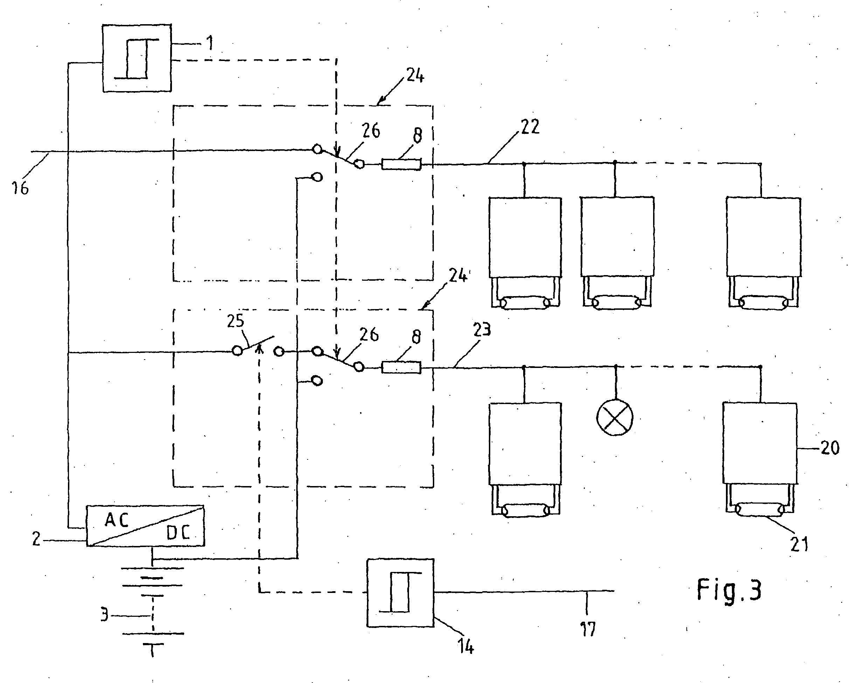

Eine Einrichtung zur zentralen Notlichtversorgung der vorgenannten Art wird beispielsweise durch die DIN VDE 0108 vorgeschrieben. In Fig. 3 ist eine derartige, zum Stand der Technik gehörige Einrichtung kurz skizziert. Die darin beschriebene Einrichtung weist einen Endstromkreis 22 der Notbeleuchtung auf, bei dem die Leuchten in Dauerschaltung betrieben werden, sowie einen zweiten Endstromkreis 23 der Notbeleuchtung, bei dem die Leuchten in Bereitschaftsschaltung betrieben werden. Es können beispielsweise Leuchten mit einem Vorschaltgerät 20 und einer Leuchtstofflampe 21 verwendet werden. Alternativ dazu können beispielsweise auch handelsübliche Glühlampen mit den Endstromkreisen 22, 23 verbunden werden. Die Einrichtung nach dem Stand der Technik umfaßt weiterhin einen Spannungswächter 14, der Spannungsabfälle im Bereich der Unterverteiler 17 der Allgemeinbeleuchtung registrieren kann. Weiterhin umfaßt die Einrichtung eine zentrale Stromversorgungseinrichtung 16 für die Notlichtversorgung, über die im Normalzustand, d. h. wenn keinerlei Spannungsabfälle registriert werden, die in Dauerschaltung betriebenen Leuchten ständig mit Strom versorgt werden. Bei diesen Leuchten kann es sich beispielsweise um Leuchten handeln, die Rettungswege und Notausgänge kennzeichnen. Wenn der Spannungswächter 14 einen Spannungsabfall in einzelnen Abschnitten der Allgemeinbeleuchtung registriert, wirkt er auf ein in einer Stromkreisumschalteinrichtung 24 angeordnetes Schaltelement 25 ein, das die Bereitschaftslichtleuchten in dem Endstromkreis 23 mit der zentralen Stromversorgungseinrichtung 16 verbindet. Falls diese auch ausfällt, wird dies von einem weiteren Spannungswächter 1 registriert. Dieser Spannungswächter 1 wirkt dann auf die in den Stromkreisumschalteinrichtungen 24 angeordneten Schaltelemente 26 ein, die dann beide Endstromkreise 22, 23 mit einer Zentralbatterie 3 verbinden.

Durch die obengenannte DIN-Vorschrift wird weiterhin gefordert, daß bei mehreren Leuchten der Notlichtversorgung in einem Bereich diese Leuchten auf mindestens zwei Endstromkreise der Sicherheitsstromversorgung aufgeteilt werden müssen. Dies hat zur Folge, daß für einen Bereich, der mit Notlichtleuchten als Dauerlichtleuchten und Bereitschaftslichtleuchten versorgt werden muß, mindestens vier Endstromkreise der Sicherheitsstromversorgung bereitgestellt werden müssen, nämlich zwei Stromkreise für die Dauerlichtleuchten und zwei Stromkreise für die Bereitschaftslichtleuchten. Weiterhin muß bereits bei der Planung festgelegt werden, welche Notleuchten als Dauerlichtleuchten und welche als Bereitschaftslichtleuchten betrieben werden sollen. Eine nachträgliche Änderung ist bei dem Stand der Technik nur durch Uminstallationen möglich.

Das der vorliegenden Erfindung zugrundeliegende Problem ist die Schaffung einer Einrichtung zur zentralen Notlichtversorgung der eingangs genannten Art, die flexibel und mit wenig Installationsaufwand realisierbar ist.

Dies wird erfindungsgemäß durch eine Einrichtung der eingangs genannten Art mit den Kennzeichnenden Merkmalen des Anspruchs 1 erreicht. Dadurch wird es möglich, sowohl die Dauerlichtleuchten als auch die Bereitschaftslichtleuchten in den gleichen Endstromkreisen zu betreiben, an denen permanent Spannung anliegt. Dadurch wird die Zahl der notwendigen Endstromkreise halbiert von beispielsweise vier auf zwei. Aufgrund der Tatsache, daß die als Bereitschaftslichtleuchten betriebenen Leuchten einer Schalteinheit zugeordnet sind, die Mittel zur Erkennung der Spannungsform umfaßt, können die Bereitschaftsleuchten dadurch eingeschaltet werden, daß in den Stromkreisumschalteinrichtungen angeordnete Mittel die Spannungsform der Endstromkreise gezielt verändern.

Vorteilhafterweise ist jeder Bereitschaftslichtleuchte genau eine Schalteinheit und jeder Schalteinheit genau eine Bereitschaftslichtleuchte zugeordnet. Die Schalteinheit kann beispielsweise in das Gehäuse der Bereitschaftslichtleuchte integriert werden, so daß sich eine kompakte Einheit ergibt.

Gemäß einer bevorzugten Ausführungsform der vorliegenden Erfindung ist jeder der Leuchten ein Schaltelement zugeordnet, das vorzugsweise als Schalter oder als programmierbares Element wie beispielsweise als EEPROM ausgeführt ist, mit dem ausgewählt werden kann, ob die Leuchte als Dauerlichtleuchte oder als Bereitschaftslichtleuchte betrieben wird. Vorteilhafterweise ist jeder der Leuchten eine Schalteinheit mit Mitteln zur Spannungsformerkennung zugeordnet, wobei die Leuchte nur dann in Abhängigkeit von der Spannungsform ein- oder ausschaltbar ist, wenn sie aufgrund der entsprechenden Stellung des Schalters als Bereitschaftslichtleuchte betrieben wird. Es besteht also die Möglichkeit, als kompakte Einheiten ausgestaltete Leuchten in beispielsweise einem Endstromkreis anzuordnen und nachträglich beliebig festzulegen, ob die Leuchte als Dauerlichtleuchte oder als Bereitschaftslichtleuchte betrieben werden soll. Diejenigen Leuchten, bei denen sich der Schalter in der Stellung "Dauerlichtleuchte" befindet, sind unabhängig von der anliegenden Spannungsform permanent eingeschaltet. Diejenigen Leuchten, bei denen sich der Schalter in der Stellung "Bereitschaftslichtleuchte" befindet, werden von der Schalteinheit nur dann eingeschaltet, wenn eine Spannungsform in dem Endstromkreis anliegt, die dem Betrieb der Bereitschaftslichtleuchten zugeordnet ist.

Vorteilhafterweise schalten die Schalteinheiten die Bereitschaftslichtleuchten aus, wenn in den Endstromkreisen eine Wechselspannung anliegt. Weiterhin schalten die Schalteinheiten die Bereitschaftslichtleuchten vorteilhafterweise dann ein, wenn in den Endstromkreisen eine Gleichspannung anliegt. Hierzu muß also die Spannungsform bei Nichtregistrierung eines Spannungsabfalls nicht geändert werden, weil dann in der Regel die Wechselspannung der zentralen Stromversorgungseinrichtung für die Notlichtversorgung an den Endstromkreisen anliegt. Weiterhin muß auch bei Ausfall der zentralen Stromversorgungseinrichtung für die Notlichtversorgung die Spannungsform nicht geändert werden, weil dann die Gleichspannung der Zentralbatterie in den Endstromkreisen anliegt. Um bei Spannungsabfällen in einzelnen Abschnitten der Allgemeinbeleuchtung, bei denen die Endstromkreise von der zentralen Stromversorgungseinrichtung für die Notlichtversorgung versorgt werden sollen und gleichzeitig die Bereitschaftslichtleuchten eingeschaltet werden sollen, eine Änderung der Spannungsform zu erreichen, sind die Mittel zur Veränderung der Spannungsform als Gleichrichter, insbesondere als Brückengleichrichter, ausgeführt. Diese Gleichrichter werden bei Registrierung eines Spannungsabfalls in einem oder mehreren Abschnitten der Allgemeinbeleuchtung von in den Stromkreisumschalteinrichtungen angeordneten Schaltelementen zwischen die zentrale Stromversorgungseinrichtung und die Endstromkreise geschaltet und wandeln dann den Wechselstrom aus der zentralen Stromversorgung in einen gegebenenfalls pulsierenden Gleichstrom um. Dieser Gleichstrom wird dann von den Schalteinheiten der Leuchten erkannt, woraufhin diese die Leuchten, wenn sie als Bereitschaftslichtleuchten betrieben werden, einschalten.

Die erfindungsgemäße Einrichtung kann Leuchtstofflampen umfassen, wobei die Schalteinheit dann in das zugehörige Vorschaltgerät integriert sein kann oder aber als zusätzliches Schaltmodul einer Leuchtstofflampe mit einem handelsüblichen Vorschaltgerät zugeordnet sein kann. Ebenso kann die Einrichtung Glühlampen umfassen, wobei dann die Schalteinheit der Glühlampe als zusätzliches Schaltmodul zugeordnet ist.

Weitere Vorteile und Merkmale der vorliegenden Erfindung werden deutlich anhand der nachfolgenden Beschreibung bevorzugter Ausführungsbeispiele unter Bezugnahme auf die beiliegenden Abbildungen.
- Fig. 1: eine schematische Darstellung einer erfindungsgemäßen Einrichtung zur zentralen Notlichtversorgung;
- Fig. 2a: die in einem erfindungsgemäßen Endstromkreis einer Notlichtversorgung anliegende Spannungsform im Normalbetrieb;
- Fig. 2b: die in einem erfindungsgemäßen Endstromkreis einer Notlichtversorgung anliegende Spannungsform im Notbetrieb bei ausgefallenem Unterverteiler;
- Fig. 2c: die in einem erfindungsgemäßen Endstromkreis einer Notlichtversorgung anliegende Spannungsform im Notbetrieb bei ausgefallenem Hauptverteiler;
- Fig. 3: eine schematische Darstellung einer Einrichtung zur zentralen Notlichtversorgung gemäß dem Stand der Technik.

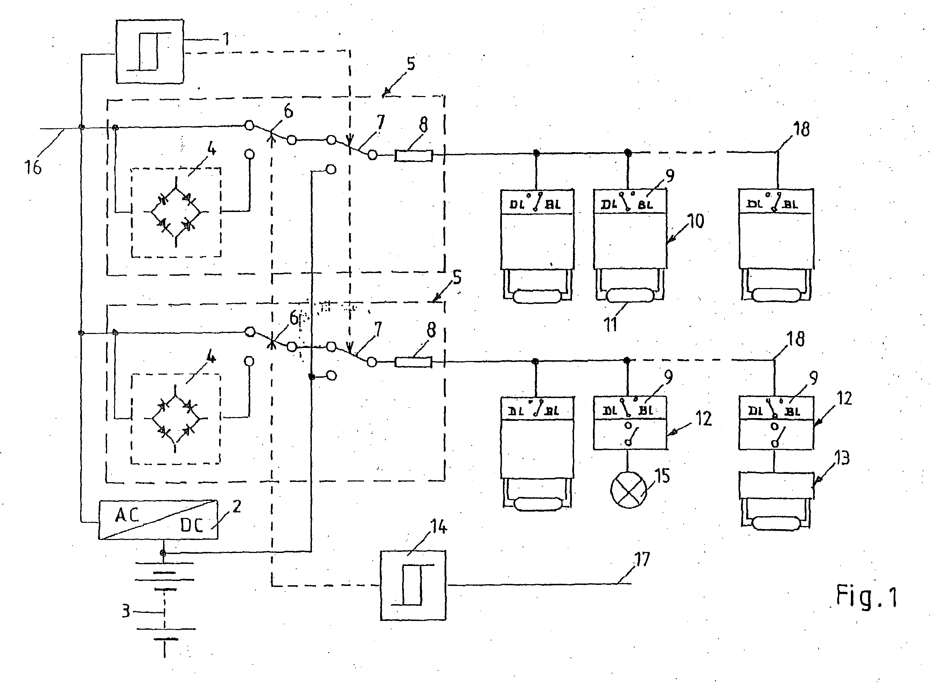

Eine in Fig. 1 abgebildete Ausführungsform einer erfindungsgemäßen Einrichtung zur zentralen Notlichtversorgung umfaßt mindestens zwei Endstromkreise 18 der Notbeleuchtung sowie mindestens zwei, diesen zugeordnete Stromkreisumschalteinrichtungen 5. Es besteht durchaus die Möglichkeit, daß eine erfindungsgemäße Einrichtung zur zentralen Notlichtversorgung mehr als zwei Endstromkreise 18 mit jeweils einer dazugehörigen Stromkreisumschalteinrichtung 5 umfaßt.

Zur Vereinfachung ist die in Fig. 1 abgebildete erfindungsgemäße Einrichtung zur zentralen Notlichtversorgung einpolig dargestellt.

An den Stromkreisumschalteinrichtungen 5 liegen eingangsseitig der Hauptverteiler 16 einer Sicherheitsstromversorgung, die für die Notlichtversorgung genutzt wird, sowie eine Zentralbatterie 3 an, die im Normalbetrieb von dem Hauptverteiler 16 über ein Ladegerät 2 geladen wird. Im Normalbetrieb schalten die Stromkreisumschalteinrichtungen 5 die vom Hauptverteiler 16 zur Verfügung gestellte Netzwechselspannung von beispielsweise 220 Volt und 50 Hertz über Stromkreissicherungen 8 in die Endstromkreise 18 durch.

An den Endstromkreisen 18 können über elektronische Vorschaltgeräte 10 mit Steuerungselektronik handelsübliche Leuchtstofflampen mit Strom versorgt werden. Weiterhin können über Schaltmodule 12 handelsübliche Leuchten 13 mit integrierten elektronischen Vorschaltgeräten sowie die Glühlampen 15 angeschlossen werden.

Sowohl die elektronischen Vorschaltgeräte 10 mit Steuerungselektronik als auch die Schaltmodule 12 umfassen Schalter 9, die das Umschalten von einer Schalterstellung Dauerlicht (DL) in eine Schalterstellung Bereitschaftslicht (BL) und umgekehrt ermöglichen. Gemäß den Vorgaben, wie sie sich beispielsweise aus der DIN VDE 0108 ergeben, müssen Dauerlichtleuchten der Notlichtversorgung sowohl im Normalbetrieb als auch im Notbetrieb ständig betrieben werden. Es kann sich hierbei beispielsweise um Leuchten handeln, die Rettungswege und Notausgänge kennzeichnen. Die Bereitschaftsleuchten müssen erst dann in Betrieb genommen werden, wenn das System auf Notbetrieb umgeschaltet wird. Hier gibt es zwei Abstufungen des Notbetriebs, nämlich einen ersten Zustand, in dem ein Spannungswächter 14, der das Anliegen von Spannung an einem Unterverteiler 17 der Allgemeinbeleuchtung überwacht, einen Spannungsabfall registriert, ohne daß gleichzeitig ein Spannungswächter 1, der die am Hauptverteiler 16 der Sicherheitsstromversorgung anliegende Spannung kontrolliert, einen Spannungsabfall registriert. In diesem Fall können die Endstromkreise 18 der Notbeleuchtung weiterhin mittels einer im folgenden näher beschriebenen Umschaltung vom Hauptverteiler 16 der Sicherheitsstromversorgung mit Strom versorgt werden. In einem zweiten Zustand des Notbetriebs stellt der Spannungswächter 1, der die am Hauptverteiler 16 der Sicherheitsstromversorgung anliegende Spannung kontrolliert, einen Spannungsabfall fest, so daß die Endstromkreise 18 der Notbeleuchtung nur noch über ebenfalls im folgenden beschriebene Umschaltungen von der Zentralbatterie 3 mit Strom versorgt werden können. In den beiden genannten Zuständen des Notbetriebs müssen die als Bereitschaftsleuchten funktionierenden Leuchten eingeschaltet werden.

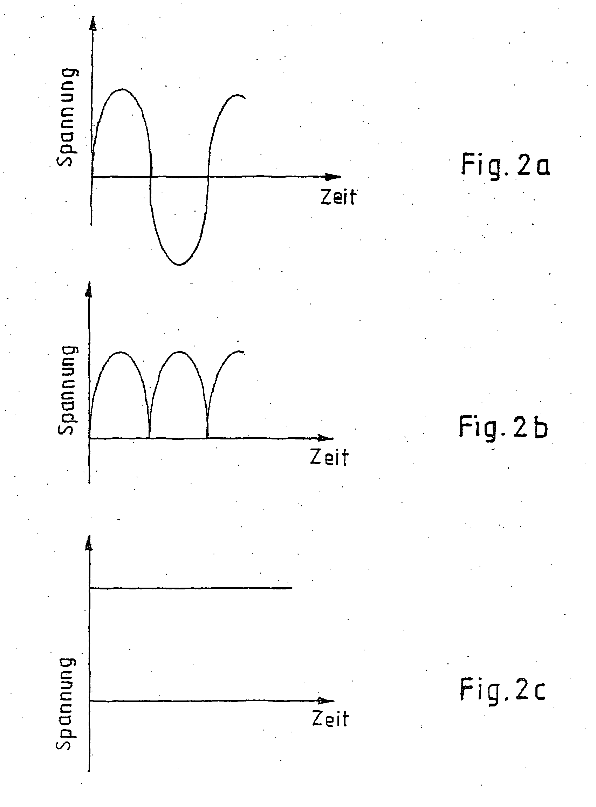

Im ersten Zustand des Notbetriebs, in dem der Spannungswächter 14 einen Spannungsabfall im Unterverteiler 17 der Allgemeinbeleuchtung registriert, wirkt der Spannungswächter 14 auf die Wechselkontakte 6 der Stromkreisumschalteinrichtungen 5 ein. Die Wechselkontakte 6 verbinden daraufhin die Endstromkreise 18 über in den Stromkreisumschalteinrichtungen 5 angeordnete Brückengleichrichter 4 mit dem Hauptverteiler 16 der Sicherheitsstromversorgung. Aus Fig. 2b ist die darauf resultierende Form der in den Endstromkreisen 18 anliegenden Spannung ersichtlich. Die aus Fig. 2a ersichtliche Form einer normalen Netzwechselspannung wird durch die Brückengleichrichter 4 so gleichgerichtet, daß die negativen Äste der sinusförmigen Spannung nach oben umgeklappt werden, so daß keine Umpolung mehr stattfindet.

Für den Fall, daß der Spannungswächter 1 den Zusammenbruch der Spannung am Hauptverteiler 16 der Sicherheitsstromversorgung registriert, wirkt der Spannungswächter 1 auf in den Stromkreisumschalteinrichtungen 5 angeordnete Wechselkontakte 7 ein, die die Endstromkreise 18 der Notbeleuchtung an die Zentralbatterie 3 anschließen. Die daraus resultierende Spannungsform einer zeitlich konstanten Gleichspannung ist aus Fig. 2c ersichtlich.

Die elektronischen Vorschaltgeräte 10 sowie die Schaltmodule 12 stellen eine Schalteinheit dar, die eine Ansteuerung der mit ihnen verbundenen Leuchten 11, 13, 15 in Abhängigkeit von der Form der in den Endstromkreisen 18 anliegenden Spannung ermöglicht. Solange sich die jeweiligen Schalter 9 in der Stellung DL befinden, ist die Leuchte als Dauerlichtleuchte angewählt und wird unabhängig von der Wahl der in den Fig. 2a bis Fig. 2c abgebildeten Spannungsformen durchgängig betrieben. Falls sich die entsprechenden Schalter 9 in der Stellung BL befinden, muß die an das Vorschaltgerät 10 oder das Schaltmodul 12 angeschlossene Leuchte 11, 13, 15 nur bei Notbetrieb eingeschaltet werden. Die elektronischen Vorschaltgeräte 10 und die Schaltmodule 12 umfassen daher Schaltelemente, die beim Anliegen einer Wechselspannung diese nicht mit den mit ihnen verbundenen Leuchten 11, 13, 15 verbinden. Beim Anliegen einer konstanten oder einer nur aus positiven Halbwellen bestehenden pulsierenden Gleichspannung wird von diesen Schaltelementen die anliegende Spannung an die mit ihnen verbundenen Lampen 11, 13, 15 weitergegeben. Auf diese Weise wird erreicht, daß bei den in den beiden im vorgenannten beschriebenen Zuständen des Notbetriebs auftretenden Spannungsformen diejenigen Leuchten in Betrieb genommen werden, deren Schalter 9 sich in der Stellung BL befinden.

## Patentansprüche

1. Einrichtung zur zentralen Notlichtversorgung, insbesondere in einem Gebäude oder dergleichen, das neben der Notlichtversorgung auch eine Allgemeinbeleuchtung aufweist, umfassend
- mindestens zwei Endstromkreise (18) einer Notbeleuchtung mit zwei Gruppen daran angeschlossener Leuchten (11, 13, 15), wobei die Leuchten (11, 13, 15) der ersten Gruppe als Dauerlichtleuchten und die Leuchten (11, 13, 15) der zweiten Gruppe als Bereitschaftslichtleuchten ausgeführt sind;
- eine zentrale Stromversorgungseinrichtung (16) für die Notlichtversorgung;
- eine Zentralbatterie (3) für die Notlichtversorgung;
- Spannungswächtereinheiten (1, 14) zur Registrierung eines Spannungsabfalls in einzelnen Abschnitten (17) der Allgemeinbeleuchtung und/oder im Bereich der zentralen Stromversorgungseinrichtung (16) für die Notlichtversorgung; sowie
- mit den Endstromkreisen (18) verbundene Stromkreisumschalteinrichtung (5), die in einem ersten Zustand des Notbetriebs bei Registrierung eines Spannungsabfalls in einem oder mehreren Abschnitten der Allgemeinbeleuchtung eine Versorgung der Bereitschaftslichtleuchten (11, 13, 15) mit Strom aus der zentralen Stromversorgungseinrichtung (16) für die Notlichtversorgung gewährleisten und in einem zweiten Zustand des Notbetriebs bei Registrierung eines Spannungsabfalls im Bereich der zentralen Stromversorgungseinrichtung für die Notlichtversorgung eine Versorgung der Bereitschaftslichtleuchten (11, 13, 15) und der Dauerlichtleuchten (11, 13, 15) mit Strom aus der Zentralbatterie (3) gewährleisten,
**dadurch gekennzeichnet,**
- **dass** die Einrichtung Mittel (4) zur Veränderung der an den Endstromkreisen (18) anliegenden Spannungsform umfasst, die in dem ersten Zustand des Notbetriebs die Spannungsform der Endstromkreise (18) gezielt verändern, um dadurch die Bereitschaftslichtleuchten (11, 13, 15) einzuschalten, und einzelnen Bereitschaftslichtleuchten (11, 13, 15) Schalteinheiten (10, 12) zugeordnet sind, die Mittel zur Erkennung der Spannungsform umfassen und in Abhängigkeit von der in den Endstromkreisen (18) anliegenden Spannungsform die zugeordnete oder die zugeordneten Bereitschaftslichtleuchten (11, 13, 15) ein- oder ausschalten und
- **dass** an die zwei Endstromkreise (18) jeweils Leuchten der ersten Gruppe und Leuchten der zweiten Gruppe angeschlossen sind.

2. Einrichtung nach Anspruch 1, **dadurch gekennzeichnet, daß** jeder Bereitschaftslichtleuchte (11, 13, 15) genau eine Schalteinheit (10, 12) und jeder Schalteinheit (10, 12) genau eine Bereitschaftslichtleuchte (11, 13, 15) zugeordnet ist.

3. Einrichtung nach einem der Ansprüche 1 oder 2, **dadurch gekennzeichnet, daß** jeder der Leuchten (11, 13, 15) ein Schaltelement (9) zugeordnet ist, das vorzugsweise als Schalter (9) oder als programmierbares Element wie beispielsweise als EEPROM ausgeführt ist, mit dem ausgewählt werden kann, ob die Leuchte (11, 13, 15) als Dauerlichtleuchte oder als Bereitschaftslichtleuchte betrieben wird.

4. Einrichtung nach Anspruch 3, **dadurch gekennzeichnet, daß** jeder der Leuchten (11, 13, 15) eine Schalteinheit (10, 12) mit Mitteln zur Spannungsformerkennung zugeordnet ist, wobei die Leuchte (11, 13, 15) nur dann in Abhängigkeit von der Spannungsform ein- oder ausschaltbar ist, wenn sie aufgrund der entsprechenden Stellung des Schalterelementes (9) als Bereitschaftslichtleuchte betrieben wird.

5. Einrichtung nach einem der Ansprüche 1 bis 4, **dadurch gekennzeichnet, daß** die Schalteinheiten (10, 12) die Bereitschaftslichtleuchten (11, 13, 15) ausschalten, wenn in den Endstromkreisen (18) eine Wechselspannung anliegt, und die Bereitschaftslichtleuchten (11, 13, 15) einschalten, wenn in den Endstromkreisen (18) eine Gleichspannung anliegt.

6. Einrichtung nach einem der Ansprüche 1 bis 5, **dadurch gekennzeichnet, daß** die Mittel (4) zur Veränderung der Spannungsform in den Stromkreisumschalteinrichtungen (5) angeordnet sind.

7. Einrichtung nach einem der Ansprüche 1 bis 6, **dadurch gekennzeichnet, daß** die Mittel (4) zur Veränderung der Spannungsform als Gleichrichter, insbesondere als Brückengleichrichter ausgeführt sind, die bei Registrierung eines Spannungsabfalls in einem oder mehreren Abschnitten der Allgemeinbeleuchtung von in den Stromkreisumschalteinrichtungen (5) angeordneten Schaltelementen (6) zwischen die zentrale Stromversorgung (16) und die Endstromkreise (18) geschaltet werden und den Wechselstrom aus der zentralen Stromversorgung (16) in einen gegebenenfalls pulsierenden Gleichstrom umwandeln.

8. Einrichtung nach einem der Ansprüche 1 bis 7, **dadurch gekennzeichnet, daß** die Leuchten eine Leuchtstofflampe (11) umfassen, wobei die Schalteinheit in das zugehörige Vorschaltgerät (10) integriert ist.

9. Einrichtung nach einem der Ansprüche 1 bis 7, **dadurch gekennzeichnet, daß** die Leuchten eine Leuchtstofflampe (13) mit einem handelsüblichen Vorschaltgerät umfassen, wobei die Schalteinheit als zusätzliches Schaltmodul (12) ausgeführt ist.

10. Einrichtung nach einem der Ansprüche 1 bis 7, **dadurch gekennzeichnet, daß** die Leuchten eine Glühlampe (15) umfassen, wobei die Schalteinheit als zusätzliches Schaltmodul (12) ausgeführt ist.

## Claims

1. Device for central emergency lighting supply, in particular in a building or the like, which is provided with a general lighting system besides the emergency lighting supply, comprising
- at least two end circuits (18) of an emergency lighting supply with two groups of lighting units (11, 13, 15) connected thereto, the lighting units (11, 13, 15) of the first group being designed as steady-burning lights and the lighting units (11, 13, 15) of the second group being designed as stand-by lights;
- a central electric power supply (16) for the emergency lighting supply;
- a central battery (3) for the emergency lighting supply;
- voltage monitoring units (1, 14) for recognizing a voltage drop in individual sections (17) of the general lighting system and/or in the region of the central electric power supply (16) for the emergency lighting supply; as well as
- switchover devices (5) for the electric circuits, which devices are connected to the end circuits (18), which, in a first state of emergency operation, in the case of recognizing a voltage drop in one or several sections of the general lighting system guarantee the supply of the stand-by lights (11, 13, 15) with electricity from the central electric power supply (16) for the emergency lighting supply, and which, in a second state of emergency operation, in the case of recognizing a voltage drop in the region of the central electric power supply for the emergency lighting supply guarantee the supply of the stand-by lights (11, 13, 15) and the steady-burning lights (11, 13, 15) with electricity from the central battery (3),
**characterised**
- **in that** the device comprises means (4) for changing the form of voltage applied to the end circuits (18), which means, in the first state of emergency operation, change the form of voltage of the end circuits (18) in a targeted manner in order to thereby switch on the stand-by lights (11, 13, 15), and switching units (10, 12) are associated with the individual stand-by lights (11, 13, 15), are provided with means for recognizing the form of voltage and switch on or off the allocated stand-by light or lights (11, 13, 15) in dependence on the form of voltage applied to the end circuits (18), and
- **in that** in each case lights of the first group and lights of the second group are connected to the two end circuits (18).

2. Device as claimed in claim 1, **characterised in that** each stand-by light (11, 13, 15) is associated with exactly one switching unit (10, 12) and each switching unit (10, 12) is associated with exactly one stand-by light (11, 13, 15).

3. Device as claimed in one of claims 1 or 2, **characterised in that** each light (11, 13, 15) is associated with a switching element (9) which is preferably constructed as a switch (9) or as a programmable element like an EEPROM, for example, by means of which the kind of operation of the light (11, 13, 15) as steady-burning light or as stand-by light can be chosen.

4. Device as claimed in claim 3, **characterised in that** each light (11, 13, 15) is associated with a switching unit (10, 12) comprising means for recognizing the kind of voltage, said light (11, 13, 15) being able to be switched on or off depending on the kind of voltage only **in that** case in which it is operated as a stand-by light due to the position of the switching element (9).

5. Device as claimed in any one of claims 1 to 4, **characterised in that** the switching units (10, 12) switch off the stand-by lights (11, 13, 15) for the case that an alternating voltage is applied to the end circuits (18) and switch on the stand-by lights (11, 13, 15) in the case that a direct voltage is applied to the end circuits (18).

6. Device as claimed in any one of claims 1 to 5, **characterised in that** the means (4) for changing the kind of voltage are arranged in the switch over devices (5) for the electric circuit.

7. Device as claimed in any one of claims 1 to 6, **characterised in that** the means (4) for changing the kind of voltage are constituted by rectifiers, in particular by bridge rectifiers, which in the case of recognizing a voltage drop in one or several sections of the general lighting plant are connected in series between the central electric power supply (16) and the end circuits (18) by switching elements (6) arranged in the switch over devices (5) for the electric circuit, and convert the alternating current from the central electric power supply (16) into a, if necessary, pulsating direct current.

8. Device as claimed in any one of claims 1 to 7, **characterised in that** the lighting units comprise a fluorescent lamp (11), the switching unit being integrated in the associated ballast (10).

9. Device as claimed in any one of claims 1 to 7, **characterised in that** the lighting units comprise a fluorescent lamp (13) with a commercially available ballast, the switching unit being constructed as an additional switching module (12).

10. Device as claimed in any one of claims 1 to 7, **characterised in that** the lighting units comprise an incandescent lamp (15), the switching unit being constructed as an additional switching module (12).

## Revendications

1. Dispositif pour l'alimentation centrale d'un éclairage de sécurité, en particulier dans un bâtiment ou similaires, lequel présente aussi un éclairage général en plus de l'alimentation d'un éclairage de sécurité, comprenant :
- au moins deux circuits finaux de courant (18) d'un éclairage de sécurité auxquels sont reliés deux groupes de lampes (11, 13, 15), les lampes (11, 13, 15) du premier groupe étant réalisées comme des lampes à lumière permanente et les lampes (11, 13, 15) du second groupe étant réalisées comme des lampes à lumière d'urgence,
- un dispositif (16) pour l'alimentation centrale du courant qui assure l'alimentation de l'éclairage de sécurité,
- une batterie centrale (3) qui assure l'alimentation de l'éclairage de sécurité,
- des unités de contrôle de tension (1, 14) qui enregistrent une baisse de tension dans les différentes sections (17) de l'éclairage général et/ou dans la zone du dispositif d'alimentation centrale courant (16) qui assure l'alimentation de l'éclairage de sécurité, ainsi que
- un dispositif (5) de commutation du circuit de courant raccordé aux circuits finaux de courant (18) et qui, dans un premier état du fonctionnement de secours, en cas d'enregistrement d'une baisse de tension dans une ou plusieurs sections de l'éclairage général, assure l'alimentation en courant des lampes à lumière d'urgence (11, 13, 15) à partir du dispositif (16) d'alimentation centrale en courant de l'éclairage de sécurité, et, dans un deuxième état du fonctionnement de secours, en cas d'enregistrement d'une baisse de tension dans la zone du dispositif (16) d'alimentation centrale en courant de l'éclairage de sécurité, assure l'alimentation en courant des lampes à lumière d'urgence (11, 13, 15) et des lampes d'éclairage permanent (11, 13, 15) à partir de la batterie centrale (3),
**caractérisé en ce que**
le dispositif comprend des moyens (4) en vue de modifier la forme de la tension appliqué aux circuits finaux du courant, qui, dans le premier état du fonctionnement de secours, modifient de manière ciblée la forme de la tension appliquée sur les circuits finaux du courant (18) pour ainsi brancher les lampes à lumière d'urgence (11, 13, 15) et des unités électriques (10, 12) sont associées aux lampes à lumière d'urgence individuelles (11, 13, 15), qui comprennent des moyens de reconnaissance de la forme de tension et qui branchent ou débranchent les lampes à lumière d'urgence (11, 13, 15) associées en fonction de la forme de la tension appliquée sur les circuits finaux de courant (18) et
**en ce que** des lampes du premier groupe et des lampes du deuxième groupe sont raccordées aux deux circuits finaux de courant (18).
2. Dispositif selon la revendication 1, **caractérisé en ce que** chaque lampe à lumière d'urgence (11, 13, 15) plus précisément une unité électrique (10, 12) et chaque unité électrique (10, 12) plus précisément une lampe à lumière d'urgence (11, 13, 15) est disposée.
3. Dispositif selon l'une des revendications 1 ou 2, **caractérisé en ce que,** chacune des lampes (11, 13, 15) dispose d'un élément électrique (9), lequel est créé préférablement comme interrupteur (9) ou comme élément programmable, par exemple comme EEPROM, avec la possibilité d'être utilisé, dans le cas de la lampe (11, 13, 15) comme lampe à lumière permanente ou comme lampe à lumière d'urgence.
4. Disposition selon la revendication 3, **caractérisé en ce que** chacune des lampes (11, 13, 15) est associée à une unité électrique (10, 12) avec des moyens pour la reconnaissance de la forme de tension, où la lampe (11, 13, 15) est allumée ou éteinte, seulement de façon dépendante à la forme de tension, lorqu'à cause de la position correspondante de l'élément interrupteur (9) celle-ci est actionnée en tant que lampe à lumière d'urgence.
5. Dispositif selon l'une des revendications de 1 à 4, **caractérisé en ce que** les unités électriques (10, 12) des lampes à lumière d'urgence (11, 13, 15) sont éteintes lorsque dans les circuits finals de courant (18) une tension interchangeable est présente, et **en ce que** les lampes à lumière d'urgence (11, 13, 15) sont allumées lorsque dans les circuits finals de courant (18) est présent un courant continu.
6. Dispositif selon l'une des revendications de 1 à 5, **caractérisé en ce que,** les moyens (4) pour le changement de la forme de tension dans les dispositifs de commutation du circuit du courant (5) sont disposés.
7. Dispositif selon l'une des revendications de 1 à 6, **caractérisé en ce que** les moyens (4) pour le changement de la forme de tension sont réalisés comme un redresseur, en particulier comme un redresseur en pont, lesquels sont connectées en cas d'enregistrement d'une perte de tension dans une ou plusieurs sections de l'éclairage général d'éléments électriques (6) disposés dans les dispositifs de commutation du circuit du courant (5) entre l'alimentation centrale de courant (16) et les circuits finals de courant (18) et le courant alternatif de l'alimentation centrale du courant (16) se transforme, le cas échéant, en un courant qui circule de façon continue.
8. Dispositif selon l'une des revendications de 1 à 7, **caractérisé en ce que** les lampes comprennent une lampe fluorescente (11), alors que l'unité électrique est intégrée dans le respectif appareil en série (10).
9. Dispositif selon l'une des revendications de 1 à 7, **caractérisé en ce que** les lampes comprennent une lampe fluorescente (13) avec un bloc d'alimentation disponible sur le marché, alors que l'unité électrique est réalisée en tant que module électrique additionnel (12).
10. Dispositif selon l'une des revendications de 1 à 7, **caractérisé en ce que** les lampes comprennent une lampe à incandescence (15), alors que l'unité électrique est réalisée comme module électrique additionnel (12).
